# EUROPEAN PATENT SPECIFICATION

(11) **EP 2 491 201 B1**
(45) Date of publication and mention of the grant of the patent: **07.03.2018**
(21) Application number: 10770633.5
(22) Date of filing: 22.10.2010
(51) Int. Cl.: E04G 21/32, F16G 11/00, F16G 11/04, A62B 35/00, F16G 11/14

(54) **LOCKING ASSEMBLY**
SPERRANORDNUNG
ENSEMBLE DE VERROUILLAGE

(30) Priority: 22.10.2009 NL 2003694
(43) Date of publication of application: 29.08.2012
(73) Proprietor: Dachfix GmbH, 6390 Engelberg (CH)
(72) Inventor: BERLEE, Anthonie Bernardus, NL-3735 MT Bosch en Duin (NL)
(74) Representative: Nederlandsch Octrooibureau
(86) International application number: PCT/NL2010/050702
(87) International publication number: WO 2011/049451

(56) References cited:
- WO-A1-2005/098166
- DE-A1- 3 541 413
- US-A- 3 148 427
- US-A- 3 766 610

## Description

The present invention relates to a safety assembly provided with a part which is provided with a slot, a band which is adjustable with respect thereto and which is fitted through the slot in said part as a loop, and a retaining body comprising a wedge.

In many kinds of applications, a band is to be coupled to a part which is provided with slots, such as a buckle plate or the like. An example thereof can be found in US 4761861 and US 3148427. By using a wedge-shaped body, the band is pinched into the slot when a tensile force is applied.

Such a system is satisfactory when it is used for fastening once. However, if repeated use is intended, or if safety systems or other structures are to be attached to the band which should be failure-proof, such a system with retaining body does not work satisfactorily. The reason for this is that it is impossible to rule out that the retaining body has not been fitted, as a result of which the band loop slips through the slot when subjected to load.

US 3766610 describes a structure in which a retaining body is fitted in the loop of the band. When a tensile force is exerted on the band, the retaining body pushes the band against the tapered slot. To this end, the retaining body is in the form of a wedge shape. This leads to a point concentrated load on the band, resulting in the formation of tears and failure.

US 3766610 discloses an assembly according to the preamble of claim 1 and a method according to the preamble of claim 13.

It is an object of the present invention to provide a connection between a part which is provided with a slot and a band which, on the one hand, has a large load-bearing capacity so that it can be used professionally and, on the other hand, does not suffer from the risk of an associated wedge becoming lost.

This object is achieved, according to the present invention, by the features as described in Claim 1. By using the extension provided with a thickened part which meets the above condition, the retaining body will not readily come loose during normal use once it has been fitted into the slot and, more particularly, the wedge part is situated on one side of the slot and the extension/thickened part is situated on the other side of the slot. Only by exerting a force, that is to say by a deliberate act, is it possible to remove the retaining body. This results in significantly improved safety of the structure. In this case, the thickened part can directly adjoin the wedge, but it is also possible for a part of smaller dimensions to be located in between.

According to the invention, the slot is elongate and so is the retaining body, so that the band has a larger contact surface (adhesive contact) with the wedge and the slot when the load is exerted, so that damage thereto and/or failure thereof can be prevented. Due to the fact that, according to the present invention, the thickened part can be pulled through the slot together with the band, which is preferably fitted as a loop around the thickened part, in which case the thickened part can then not be moved back without exerting a significant load, it is, on the one hand, possible to prevent loss of the wedge in a secure manner. On the other hand, it is possible to connect the band in a simple manner to the part which is provided with a slot. This is due to the fact that with many applications, the band is provided on one or both free ends with any suitable coupling part which has large dimensions such that it cannot pass through the slot. According to the present invention, the band is folded as a loop and inserted through the slot, after which the thickened part of the wedge is fitted in the protruding loop part and the band is then pulled back into the slot.

Moving the thickened part through the slot can be achieved due to the fact that the thickened part and/or the band are elastic.

The present invention also relates to a safety assembly comprising a band to be attached to a building structure and a part to be attached to such band.

Such a safety assembly is known from EP17335509 which describes a pitched roof in which a band is present which is situated under the tiling batten on the roof boarding. This band is attached in one or more locations to the beam or the like which is situated under the roof boarding. Coupling parts can be provided at various locations on the band. Further coupling parts may be attached to these coupling parts, which further coupling parts may be attached to the belt of an operator by means of a band, or to a further structure or support which has to be put up temporarily, such as a fence or scaffold. Details of such a connection can be found in PCT/NL2005/000590.

The attachment of the band to the roof is effected at the free end thereof, for example by means of a securing structure, such as screws. Other attachments may also be present. The attachment of the coupling part to the band is achieved, according to the previous publications, by forming a loop in the band at the location of the coupling part and turning this loop back and attaching it to itself.

Such a way of attaching the coupling part to the loop is expensive and does not make it readily possible to provide different distances between the different coupling parts in question. In addition, it does not make it possible to make simple modifications on the building site.

On the other hand, other prior art structures by means of which the coupling part could indeed be fitted displaceably with respect to the band suffer from the problem that it is not possible to guarantee that the coupling part does not substantially move with respect to the band when it is exposed to a large load, such as occurs in the case of a fall.

It is a further object of the present invention to provide a safety assembly wherein the band is displaceable, but wherein it is ensured that the respective part cannot be displaced with respect to the band when it is exposed to a large load.

This object is achieved with an above-described safety assembly in that said part comprises a slot for receiving said band, in that said band is inserted through said slot in the form of a loop and a retaining body is provided on the side of said loop in said band, wherein the greatest thickness of said retaining body, with said band being provided on both sides thereof, is greater in one location than the greatest width of the slot in said location, and wherein the length of said retaining body is smaller than the length of said slot.

Surprisingly, it was found that when the loop in the slot is tightened due to being exposed to a high load, a fixed engagement between the band and the respective part is achieved due to the presence of the retaining body which cannot move through the slot due to the presence of the band. On the other hand, it is readily possible to move the loop with respect to the part.

According to an advantageous embodiment of the present invention, the retaining body is wedge-shaped and the slot, according to a further particular embodiment is conically flaring. In this case, the tip of the wedge is situated in the slot, so that when the loop in the slot is tightened, the wedge is pulled into the conically flaring slot. This results in an attachment of the band with respect to the respective part which cannot be displaced when exposed to large loads. With the safety assembly which is described above, it is possible for the retaining body to consist only of the wedge. This means that the above-described thickened part is not necessarily present in a safety assembly.

The respective part may be a coupling part, in which case the prior-art coupling parts may be specifically modified for this purpose by modifying the slot. If desired, two slots may be present. It is also possible to achieve the attachment of the band at least partly by means of such a part. With a pitched roof, it is thus possible to attach the free top end to the respective beam in a simple manner using screws or the like and, at a lower location on the roof, to attach a part to a beam or another secure part of the roof and to provide this with a slot, as described above, into which the retaining body is inserted.

In normal circumstances, such a part does not have a function, but as soon as a large tensile force is exerted on the band, the retaining body which is present therein, together with the band wound around it, is clamped in the slot and such a force-absorbing attachment part can absorb a significant portion of the force introduced by the coupling part. Obviously, it is possible to embody the invention only with either such a force-absorbing attachment part or coupling part without the coupling part or force-absorbing attachment part, respectively, being present. The combination thereof is also possible.

According to a further advantageous embodiment of the invention, the retaining body is provided with an extension in the direction of the slot. More particularly, this extension is in turn provided with a thickening. The thickening has a dimension which is such that it can be introduced through the slot, but can only be introduced therein or removed by using significant force when the band loop is present. This means that the position of the band with respect to the part to which the band is attached, can be adjusted without removing the retaining body.

In this way, it is possible to prevent the retaining body from becoming lost when the loop is not tightened with respect to the part, which would result in a very unsafe situation.

This thickening is preferably also elongate and preferably extends in the same direction as the preferably elongate wedge. According to a further embodiment of the present invention, the width direction in which the thickening extends is the same width direction in which the wedge extends with respect to an axis that extends from the wedge to the thickening.

According to a further advantageous embodiment of the invention, said part comprises a securing plate and the other end of the band is provided with a coupling part. This variant is embodied for example such that the securing plate is fixedly attached to the roof and the band is adjustable with respect to the securing plate by means of the above-described structure. The band then runs under the roof boarding and continues to the outside and the coupling part is fitted on the outer side. A further coupling part can be connected to this coupling part in the manner described above. This coupling part is situated permanently outside the roof boarding. The band is preferably not adjustable with respect to the coupling part and the extent to which the coupling part is positioned outside the roof boarding is determined by the position of the band with respect to the securing plate. Such a structure can be used in particular in those cases where it is not desirable to remove the roof boarding in order to effect the connection between the coupling part and the further coupling part. This applies, for example, the position where the roof boarding consists of panels or the like or, in the case of roof tiles, in cases where roof tiles have been secured by means of screws, hooks and the like. In addition, it is possible to install a protective cover or the like, as a result of which the coupling part is protected against weather conditions and is not visible on the outside when not in use. If this structure is used, a roof may be provided with a number of assemblies as described above which can always be located and used in a simple manner from outside.

Although, with this variant, the adjustability of the band with respect to the securing plate with the above-described structure with retaining body has been described, it should be understood that such adjustability can be achieved in any other manner for adjusting a band with respect to a plate which is known as such in the prior art.

In addition, the present invention relates to a building structure in which the above-described safety assembly is used. This may be a flat roof, façade or pitched roof. Other building structures can also be fitted with the safety assembly according to the invention.

The invention also relates to a method according to claim 13, for fitting a band in a part.

The invention will be explained below with reference to an exemplary embodiment illustrated in the drawing, in which:
Fig. 1 diagrammatically shows a perspective view of a roof with the roof covering removed;
Fig. 2 shows a detail of the attachment of a coupling part to a band;
Fig. 3 diagrammatically shows the attachment of a coupling part to a further coupling part;
Fig. 4 shows the use of the safety assembly on the roof illustrated earlier;
Figs. 5a-c show how the retaining body is fitted into the slot;
Figs. 6a-b show the illustrated structure in different positions
Fig. 7 shows an alternative of the coupling part in cross section; and
Fig. 8 shows a diagrammatic view of an alternative of the invention.

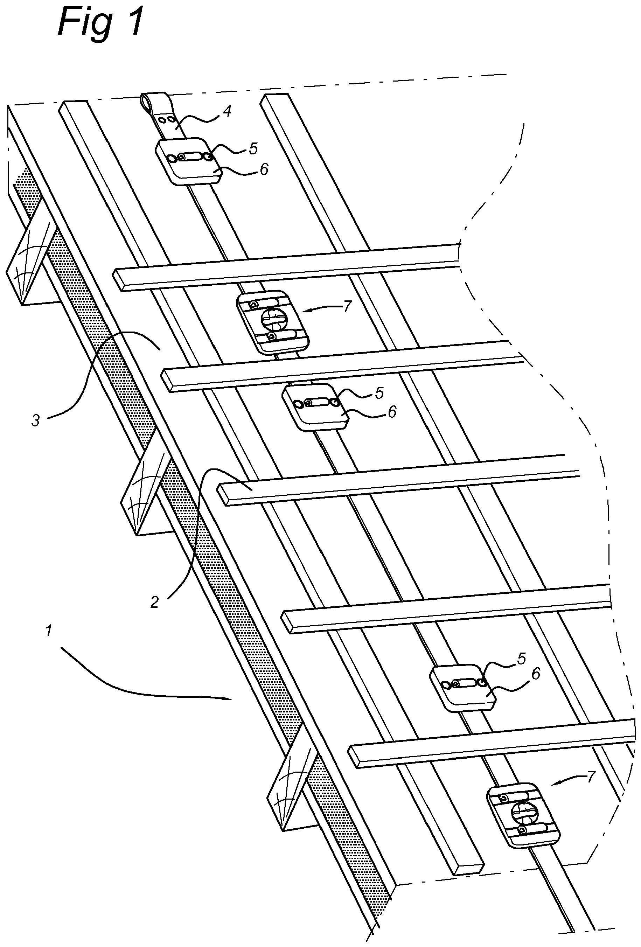

In Fig. 1, a pitched roof is denoted overall by reference numeral 1 and is provided with a safety assembly according to the invention. However, it should be understood that the safety assembly according to the invention can also be fitted to other parts of building structures. A band 4 is provided on the roof boarding 3 of the pitched roof 1. This is attached in any suitable way, at its free end, to the roof boarding and preferably to the system of beams or other sufficiently strong structure beneath it. Tiling batten 2 extend on top thereof. Any laths or other associated structural parts for the roof covering are not described in more detail here, as they are not important for the understanding of the invention. The force-absorbing attachment parts 6 are arranged at a regular distance apart along the length of the band 4. In a way which is described here in more detail, the band 4 is attached to these force-absorbing parts 6. By means of bolts 5, these force-absorbing attachment parts are attached to the roof boarding and preferably to the system of beams or the like beneath it. In addition, coupling parts 7 are present.

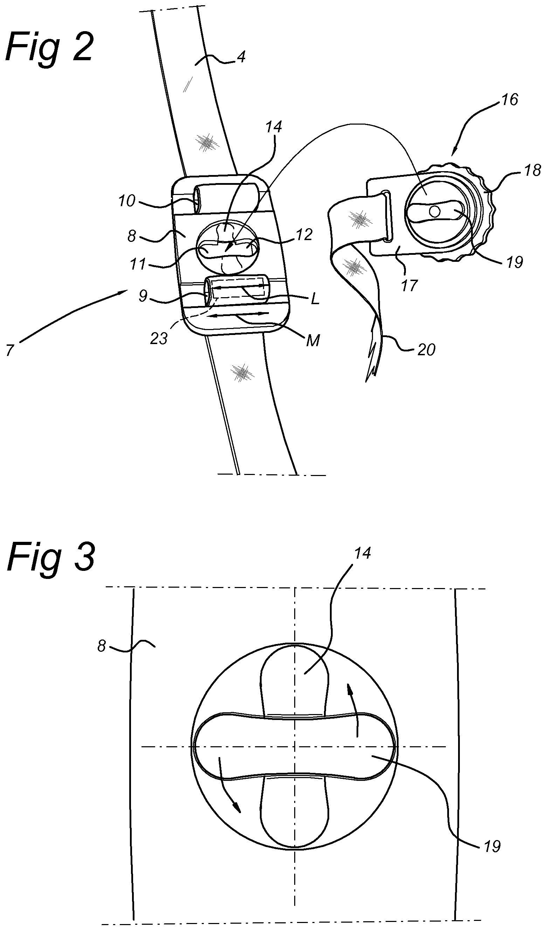

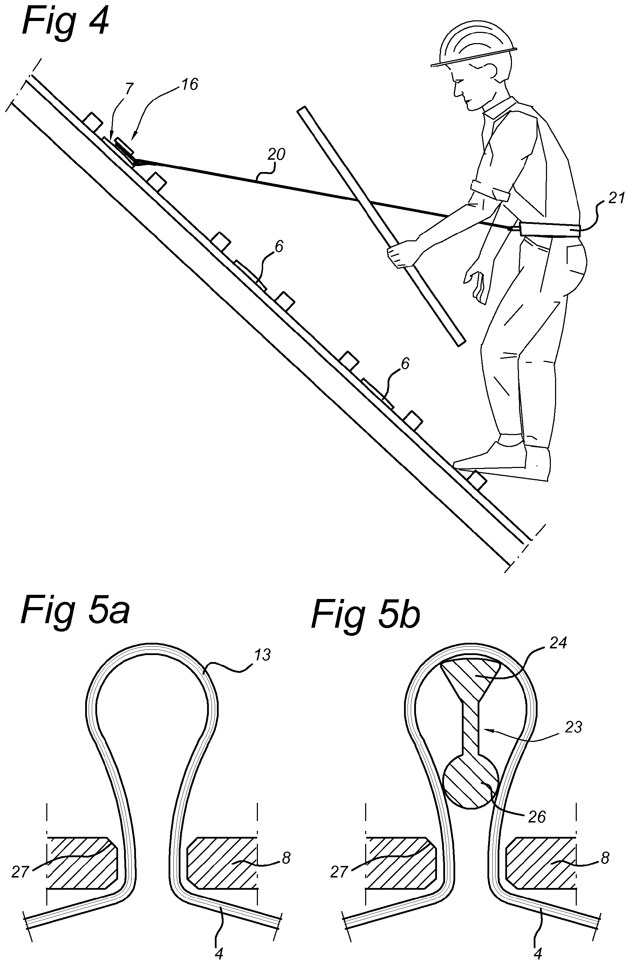

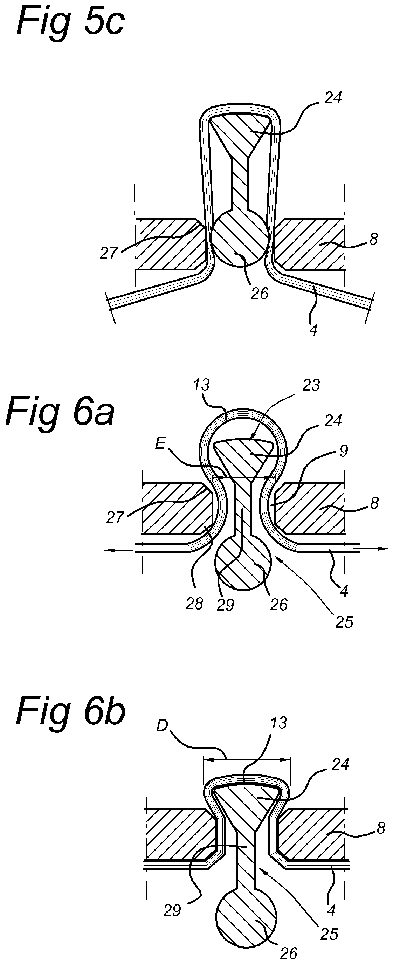

Details of the coupling parts 7 can be seen in Fig. 2. Each coupling part consists of a base plate 8 comprising two spaced-apart slots 9 and 10. In each case one loop 13 of band 4 extends through each slot 9, 10 (see Figs. 5 and 6). In each loop a retaining body 23 having a length L is arranged. This length L is smaller than (or equal to) the length M of the respective slot 9, 10. A coupling recess 11 is provided in the base plate 8 and provided with an opening. As can also be seen from Fig. 2, a further coupling part 16 is present which consists of a band 20 with a plate 17 attached thereto. Turning knob 18 is rotatable with respect to the plate and the other side of the turning knob 18 is connected to a lip 19. The size of said lip 19 corresponds to the size of the opening 12. Lip 19 is arranged at a distance from and freely protruding with respect to the other part of the further connection. This means that lip 19 can be moved from the position in which it is situated in opening 12 to the position 14 indicated by dashed lines, in which position locking takes place, by rotation. This is shown diagrammatically in Fig. 3. In this way, a safe connection between the coupling part and the further coupling part can be achieved.

Fig. 4 shows the use of the connection in combination with band 20 and belt 21. When the safety assembly according to the invention is being used, particularly large impact forces may occur. Therefore, it is important for the connection between the coupling and the band, and between the band and the force-absorbing attachment part to be very strong in situations like this. On the other hand, the aim is to achieve displaceability between the band 4 and the respective parts in order to provide as much flexibility as possible during installation.

This is achieved according to the present invention by providing one or more slots 9, 10 in the force-absorbing part 6 and the coupling part 7, respectively. Fig. 5 shows an example thereof. This shows, by way of example, the coupling part 7 and more particularly the base plate 8 thereof. This base plate 8 is provided with a slot 9. The slot 9 flares off on one side and this part is denoted by reference numeral 27. The largest width is denoted by E. On the other side, a rounding is provided in the slot 9 at 28.

A loop 13 of the band 4 is inserted into the slot 9. The retaining body 23 according to the invention is situated in this loop. As is indicated above, the length L of this retaining body 23 is smaller than (or equal to) the length M of the slot. As a result thereof, the retaining body 23 can move freely up and down in the vertical direction (as seen in Fig. 5).

Figs. 5a-c show how the retaining body 23 is arranged in the base plate 8 in combination with the band provided with a loop 13.

As is illustrated in Fig. 5a, the loop 13 is first moved through the slot in the base plate 8. In general, the free ends on both sides of the band 4 will be provided with some kind of connection so that passing the loop 3 through the slot is the only option, as is shown in Fig. 5a.

Subsequently, as is illustrated in Fig. 5b, the retaining body 23 is pushed laterally into the loop 13. In this case, the total thickness of the thickening 26 plus twice the thickness of the band 4 is greater than the width of the slot. However, some elastic deformation of the band and/or thickening is possible, as becomes clear when comparing Fig. 5b and Fig. 5c. In Fig. 6a, the retaining body has reached its end position, in which it is not possible for the retaining body to move out of the slot again.

As can be seen in Fig. 6a, an extension 25 adjoins the wedge-shaped part 24 of the retaining body 23 and is followed by a thickening 26.

The width of the thickening 26 and the thickness of the band (twice the thickness of the band) are chosen such that when the retaining body is present in the loop which is situated above the slot 9, it can only be pushed through the slot 9 using some force. Thereafter, the retaining body can readily be moved up and down in the slot 9. However, the retaining body cannot be readily removed from the slot 9, since this requires a considerable force to be applied to the thickening 26. In this way, the retaining body 23 is prevented from moving out of the slot 9 when the loop 13 is present but not tightened. By making the length of the retaining body 23 correspond as much as possible to the length of the slot, the retaining body 23 is protected further from escaping. The elasticity which is required in order to push the band with thickening 26 through the slot 9 can be provided by the band and/or the thickening. Further protection can be achieved by embodying the thickening 26 in such a manner that it can readily be moved downwards through the slot, as can be seen in Fig. 5, but cannot readily be moved back.

Fig. 6a shows the situation in which the loop or band 4 is not tightened. In this situation, it is possible to displace part 8 in a simple manner with respect to the band by displacing the loop. Thus, part 8 can be arranged in any desired position with respect to the band.

Fig. 6b shows a situation in which the band 4 has been tightened with respect to part 8 by pulling down the loop.

As can be seen in Fig. 6b, the total largest width of the wedge-shaped part 24 plus twice the thickness of the band 4, which total thickness is indicated by letter D, is greater than the abovementioned dimension E. As a result thereof, the retaining body and loop 13 can never move through the slot. Due to the wedge-shaped embodiment, further engagement between the wedge-shaped part and the corresponding part of the slot is provided.

In the above-described manner, a connection between the loop 13 or band 4 and the respective part 6, 7 is achieved which, on the one hand, allows a simple displacement with respect to one another but, on the other hand, is able to withstand very large forces in case of emergency.

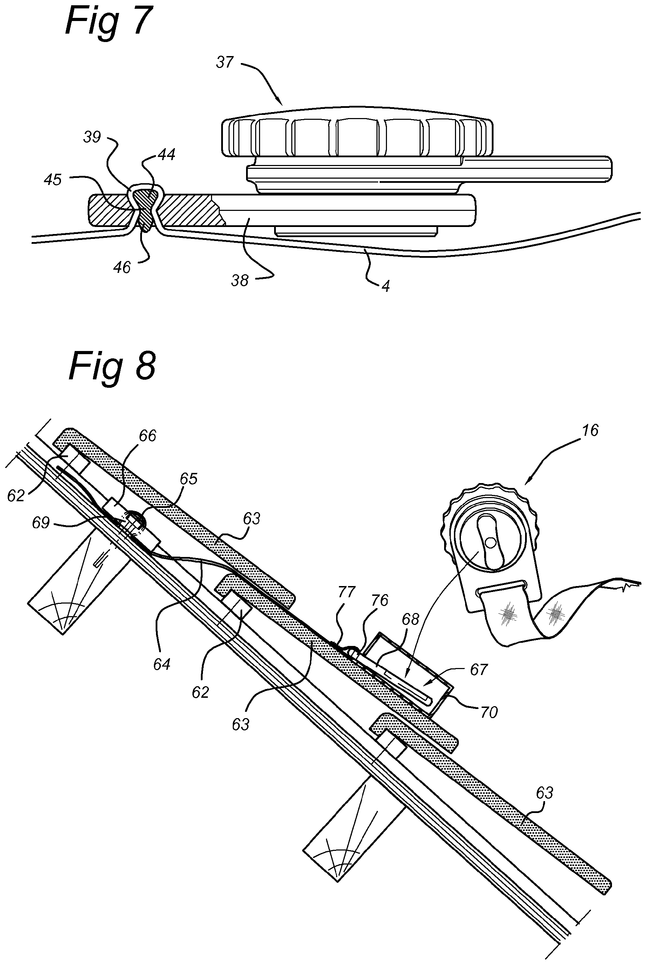

Fig. 7 shows a variant of the invention. This is a coupling part 37 with a base plate 38 which, contrary to the previous embodiments, is only provided with a single slot 39. A band 4 can be inserted into the latter in the above-described manner using a wedge-shaped part 44. In this embodiment, the extension 45 and the thickened part 46 are embodied slightly differently. The external shape thereof substantially corresponds to the internal shape of the slot 39, with the thickness of the band obviously having been taken into account.

Fig. 8 shows a variant of the present invention which can be used in particular in those cases where the roof boarding cannot readily be removed from the roof in order to thus gain access to the coupling part 7 illustrated in the preceding figures. This is the case, for example, with relatively large roof panels which are attached to the roof by means of screws or other attachment means and cannot readily be removed. Another example shown in Fig. 8 relates to the tiles 63 which are arranged on the roof 61, but which tiles cannot readily be removed as they are, for example, attached by roof tile hooks so that the roof can withstand storms. These roof tile hooks are not shown in the drawing for reasons of clarity.

In the cases to which the variant from Fig. 8 relates, the coupling part 67 is positioned permanently outside the roof boarding. The aim is to fit this surface just below the free end edge of a roof tile 63. This consists of a weather-resistant material and is attached to the securing plate 66 by means of a weather-resistant band 64. Securing plate 66 is securely attached to a roof beam by means of bolts 65. Coupling part 67 comprises a base plate 68 which is provided with a slot 76 through which band 64 is passed and which is fixed to itself at 77.

The securing plate 66 has an adjustment option for adjusting the length of the band 64. To this end, the securing plate 66 is provided with a slot 69 in which the structure illustrated in Figs. 5 and 6 is situated. Due to this adjustability, the part of the band 64 expanding beyond the roof boarding and exposed to the weather conditions can be adjusted. However, this adjustment is usually carried out when the roof covering is fitted and, in principle, it is not necessary to carry out any subsequent adjustments. Due to the fact that the tiles 63 are fixed, this is neither practical, nor simple. The structure shown in Fig. 2 can be attached to the coupling part 67, as has also been shown diagrammatically. This coupling part 67 can, if desired, be protected against weather conditions by means of a (plastic) cover 70.

## Claims

1. Assembly comprising a part (6, 7, 37) which is provided with a slot, a band (4) which is fitted through the slot (9, 10) in said part as a loop, and a retaining body (23, 44) comprising a wedge, which is placed in said loop, wherein the slot, band and wedge are dimensioned such that when a tensile force is applied to the band with respect to said part, the wedge is pulled into the slot opening without moving through it, wherein the retaining body is provided with an extension (25, 45) which extends in the pulling direction and is provided with a thickened part (26, 46), wherein the thickness of said thickened part (26) plus twice the thickness of the band in the non-compressed state is slightly greater than the smallest width of said slot, wherein said slot (9, 10) is elongate and comprises two parallel opposite sides, wherein said retaining body (23, 44) has an elongate shape corresponding to the slot, **characterized in that** the slot, band and thickened part are embodied such that the thickened part together with the band arranged on both of said parallel opposite sides can be pushed through the slot.

2. Assembly according to Claim 1, wherein the thickening of the thickened part extends parallel to said slot.

3. Assembly according to one of the preceding claims, wherein said slot is conically tapered (27) on a side facing the retaining body.

4. Assembly according to one of the preceding claims, wherein said extension (25) comprises, between the wedge and the thickened part, a transition part (29) the thickness of which is smaller than half of the smallest opening dimension of the slot.

5. Assembly according to Claim 4, wherein said extension (25), in a position of use (fig. 6b), extends beyond said slot.

6. Assembly according to one of the preceding claims, wherein said part comprises two spaced-apart slots (9, 10).

7. Assembly according to one of the preceding claims, wherein said part (6, 7, 66) is provided with attachment means (5) for attachment to a building structure.

8. Assembly according to one of the preceding claims, wherein said part is embodied as a coupling part (7) for removably receiving a further coupling part (16).

9. Assembly according to one of the preceding claims 1-7, wherein said part (66) comprises a securing plate for attachment to said roof, and an end of the band (64) is provided with a coupling part (67).

10. Assembly according to Claim 9, wherein said band (64) is connected to said coupling part (67) so as not to be adjustable in length.

11. Building structure comprising a roof or façade to which an assembly according to one of the preceding claims is attached.

12. Building structure according to Claim 11, wherein the assembly is attached to a pitched roof (1).

13. Method for fitting a band (4) in a part (6, 7, 37), said part (6, 7, 37) being provided with a slot, wherein said band (4) is fitted through the slot (9, 10) in said part (4) as a loop, and a retaining body (23, 44) comprising a wedge, placed in said loop, wherein the slot, band and wedge are dimensioned such that when a tensile force is applied to the band with respect to said part, the wedge is pulled into the slot opening without moving through it, wherein the retaining body is provided with an extension (25, 45) which extends in the pulling direction and is provided with a thickened part (26, 46), wherein the thickness of said thickened part (26) plus twice the thickness of the band in the non-compressed state is slightly greater than the smallest width of said slot, wherein said slot (9, 10) is elongate and comprises two parallel opposite sides, wherein said retaining body (23, 44) has an elongate shape corresponding to the slot, **characterized in that** the slot, band and thickened part are embodied such that the thickened part together with the band arranged on both sides can be pushed through the slot.

## Patentansprüche

1. Anordnung mit einem Teil (6, 7, 37), das versehen ist mit einem Schlitz, einem Band (4), welches durch den Schlitz (9, 10) in dem Teil als eine Schleife angebracht ist, und einen Rückhaltekörper (23, 44) umfassend einen Keil, der in die Schleife gelegt wird, wobei Schlitz, Band und Keil so bemessen sind, dass, wenn auf das Band relativ zu dem Teil eine Zugkraft aufgebracht wird, der Keil in die Schlitzöffnung gezogen wird, ohne sich durch sie hindurch zu bewegen, wobei der Rückhaltekörper mit einer Verlängerung (25, 45) versehen ist, die sich in der Zugrichtung erstreckt, und mit einem verstärkten Teil (26, 46) versehen ist, wobei die Dicke des verstärkten Teils (26) plus dem Zweifachen der Dicke des Bandes im nicht zusammengedrückten Zustand etwas größer ist als die kleinste Breite des Schlitzes, wobei der Schlitz (9, 10) länglich ist und zwei parallele, gegenüber liegende Seiten aufweist, wobei der Rückhaltekörper (23, 44) eine dem Schlitz entsprechende, längliche Form aufweist **dadurch gekennzeichnet, dass** Schlitz, Band und verstärkter Teil so ausgebildet sind, dass der verstärkte Teil zusammen mit dem auf beiden der parallelen, gegenüberliegenden Seiten angeordneten Band durch den Schlitz geschoben werden kann.

2. Anordnung nach Anspruch 1, wobei sich die Verstärkung des verstärkten Teils parallel zu dem Schlitz erstreckt.

3. Anordnung nach einem der vorhergehenden Ansprüche, wobei der Schlitz auf einer Seite, die dem Rückhaltekörper gegenüberliegt, konisch verjüngt (27) ist.

4. Anordnung nach einem der vorhergehenden Ansprüche, wobei die Verlängerung (25) zwischen dem Keil und dem verstärkten Teil ein Übergangsteil (29) umfasst, dessen Dicke kleiner als die Hälfte der kleinsten Öffnungsabmessung des Schlitzes ist.

5. Anordnung nach Anspruch 4, wobei sich die Verlängerung (25) in einer Gebrauchsposition (FIG. 6b) über den Schlitz hinaus erstreckt.

6. Anordnung nach einem der vorhergehenden Ansprüche, wobei das Teil zwei im Abstand angeordnete Schlitze (9, 10) aufweist.

7. Anordnung nach einem der vorhergehenden Ansprüche, wobei das Teil (6, 7, 66) mit Befestigungseinrichtungen (5) zur Befestigung an einer Gebäudestruktur versehen ist.

8. Anordnung nach einem der vorhergehenden Ansprüche, wobei das Teil als ein Kupplungsteil (7) zur entfernbaren Aufnahme eines weiteren Kupplungsteils (16) ausgebildet ist.

9. Anordnung nach einem der vorhergehenden Ansprüche 1 bis 7, wobei das Teil (66) eine Sicherungsplatte zur Befestigung an dem Dach umfasst, und ein Ende des Bandes (64) mit einem Kupplungsteil (67) versehen ist.

10. Anordnung nach Anspruch 9, wobei das Band (64) mit dem Kupplungsteil (67) verbunden ist, so dass es nicht längenverstellbar ist.

11. Gebäudestruktur mit Dach oder Fassade, an denen eine Anordnung nach einem der vorhergehenden Ansprüche befestigt wird.

12. Gebäudestruktur nach Anspruch 11, wobei die Anordnung an einem Schrägdach (1) befestigt wird.

13. Verfahren zum Anbringen eines Bandes (4) in einem Teil (6, 7, 37), das Teil (6, 7, 37) mit einem Schlitz versehen ist, wobei das Band (4) durch den Schlitz (9, 10) in dem Teil (4) als eine Schleife angebracht wird, und einem Rückhaltekörper (23, 44), umfassend einen in die Schleife gelegten Keil, wobei Schlitz, Band und Keil so dimensioniert sind, dass, wenn eine Zugkraft auf das Band relativ zu dem Teil aufgebracht wird, der Keil in die Schlitzöffnung gezogen wird, ohne sich durch sie hindurch zu bewegen, wobei der Rückhaltekörper mit einer Verlängerung (25, 45) versehen ist, die sich in der Zugrichtung erstreckt, und mit einem verstärkten Teil (46, 46) versehen ist, wobei die Dicke des verstärkten Teils (26) plus dem Zweifachen der Dicke des Bandes im nicht zusammengedrückten Zustand etwas größer ist, als die kleinste Breite des Schlitzes, wobei der Schlitz (9, 10) länglich ist und zwei parallele, gegenüberliegende Seiten umfasst, wobei der Rückhaltekörper (23, 44) eine dem Schlitz entsprechende, längliche Form aufweist, **dadurch gekennzeichnet, dass** Schlitz, Band und verstärktes Teil so ausgebildet sind, dass der verstärkte Teil zusammen mit dem auf beiden Seiten angeordneten Band durch den Schlitz geschoben werden kann.

## Revendications

1. Ensemble comprenant une pièce (6, 7, 37) munie d'une fente, une bande (4) qui est insérée en forme de boucle à travers la fente (9, 10) ménagée dans ladite pièce, et un corps de retenue (23, 44) comprenant une cale, qui est placée dans ladite boucle, dans lequel la fente, la bande et la cale sont dimensionnées de sorte que, lorsqu'une force de traction est appliquée à la bande par rapport à ladite pièce, la cale est tirée dans l'ouverture de la fente sans traverser celle-ci, dans lequel le corps de retenue est pourvu d'une extension (25, 45) qui s'étend dans la direction de traction et qui est pourvu d'une partie épaissie (26, 46), dans lequel l'épaisseur de ladite partie épaissie (26) plus deux fois l'épaisseur de la bande dans l'état non compressé est légèrement supérieure à la plus petite largeur de ladite fente, dans lequel ladite fente (9, 10) est allongée et comprend deux côtés opposés parallèles, dans lequel ledit corps de retenue (23, 44) a une forme allongée correspondant à la fente, **caractérisé en ce que** la fente, la bande et la partie épaissie sont réalisées de sorte que la partie épaissie, conjointement avec la bande disposée sur les deux côtés opposés parallèles, peut être poussée à travers la fente.

2. Ensemble selon la revendication 1, dans lequel l'épaississement de la partie épaissie s'étend parallèlement à ladite fente.

3. Ensemble selon l'une des revendications précédentes, dans lequel ladite fente est effilée en cône (27) sur un côté en regard du corps de retenue.

4. Ensemble selon l'une des revendications précédentes, dans lequel ladite extension (25) comprend, entre la cale et la partie épaissie, une partie de transition (29) dont l'épaisseur est inférieure à la moitié de la plus petite dimension d'ouverture de la fente.

5. Ensemble selon la revendication 4, dans lequel, ladite extension (25), dans une position d'utilisation (figure 6b), s'étend au-delà de ladite fente.

6. Ensemble selon l'une des revendications précédentes, dans lequel ladite pièce comporte deux fentes espacées (9, 10).

7. Ensemble selon l'une des revendications précédentes, dans lequel ladite pièce (6, 7, 66) est munie de moyens de fixation (5) destinés à être fixés à une structure de bâtiment.

8. Ensemble selon l'une des revendications précédentes, dans lequel ladite pièce est réalisée sous la forme d'une pièce d'accouplement (7) destinée à recevoir de manière amovible une autre pièce d'accouplement (16).

9. Ensemble selon l'une des revendications précédentes 1 à 7, dans lequel ladite pièce (66) comprend une plaque de fixation destinée à être fixée audit toit, et une extrémité de la bande (64) est munie d'une pièce d'accouplement (67).

10. Ensemble selon la revendication 9, dans lequel ladite bande (64) est reliée à ladite pièce d'accouplement (67) de manière non réglable en longueur.

11. Structure de bâtiment comprenant un toit ou une façade sur lequel, ou sur laquelle, est fixé un ensemble selon l'une des revendications précédentes.

12. Structure de bâtiment selon la revendication 11, dans laquelle l'ensemble est fixé à un toit en pente (1).

13. Procédé d'insertion d'une bande (4) dans une pièce (6, 7, 37), ladite pièce (6, 7, 37) étant munie d'une fente, dans lequel ladite bande (4) est insérée sous forme d'une boucle à travers la fente (9, 10) ménagée dans ladite pièce (4), et un corps de retenue (23, 44) comprenant une cale, placée dans ladite boucle, dans lequel la fente, la bande et la cale sont dimensionnées de sorte que, lorsqu'une force de traction est appliquée à la bande par rapport à ladite pièce, la cale est tirée dans l'ouverture de la fente sans la traverser, dans lequel le corps de retenue est muni d'une extension (25, 45) qui s'étend dans la direction de traction et qui est pourvu d'une partie épaissie (26, 46), dans lequel l'épaisseur de ladite partie épaissie (26) plus deux fois l'épaisseur de la bande dans l'état non compressé est légèrement supérieure à la plus petite largeur de ladite fente, dans lequel ladite fente (9, 10) est allongée et comprend deux côtés opposés parallèles, dans lequel ledit corps de retenue (23, 44) a une forme allongée correspondant à la fente, **caractérisé en ce que** la fente, la bande et la partie épaissie sont réalisées de sorte que la partie épaissie, conjointement avec la bande disposée des deux côtés, peut être poussée à travers la fente.
